# EUROPEAN PATENT APPLICATION

(11) **EP 3 321 608 A1**
(43) Date of publication of application: **16.05.2018**
(21) Application number: 17201161.1
(22) Date of filing: 10.11.2017
(51) Int. Cl.: F25C 3/00, F25C 1/22, A63H 33/00, B44C 5/00

(54) **SNOW MOULD**

(30) Priority: 14.11.2016 GB 201619279
(71) Applicant: Cooper, Robert, Leeds, West Yorkshire LS8 3DR (GB)
(72) Inventor: Cooper, Robert, Leeds, West Yorkshire LS8 3DR (GB)
(74) Representative: HGF Limited

(57) **Abstract**

A snow mould (100) comprising a foldable sheet (102), wherein the sheet has first and second edges (104A, 104B) provided with an arrangement of complementary fastening elements (106) configured to releasably connect together the first and second edges in a connected configuration, wherein, in the connected configuration, the snow mould has a base portion that narrows towards a base opening, the first and second edges extend to the base opening, and there is a filling opening (114) remote from the base opening for use when putting snow into the mould.

## Description

### TECHNICAL FIELD

The present invention relates to a snow mould, and more particularly, but not exclusively, to a mould for building a snowman.

### BACKGROUND

Snowmen and similar snow-based sculptures are conventionally constructed from a plurality of balls of snow, each formed by rolling a kernel of snow across snow laid on the ground until it grows to a sufficient size, before assembling the balls, for example by placing a smaller, upper ball of snow on top of a larger, lower, ball to provide a head and body. However, there remains a need for a device to facilitate the convenient production of improved snow-based sculptures.

### SUMMARY OF THE DISCLOSURE

According to a first aspect, there is provided a snow mould comprising a foldable sheet, wherein the sheet has first and second edges provided with an arrangement of complementary fastening elements configured to releasably connect together the first and second edges in a connected configuration, wherein, in the connected configuration, the snow mould has a base portion that narrows towards a base opening, the first and second edges extend to the base opening, and there is a filling opening remote from the base opening for use when putting snow into the mould.

The base portion may be configured to provide a planar region extending inwardly from the sides of the snow mould to the base opening, and configured to lie flat across underlying ground in use in the connected configuration. The inwardly extending planar region provides an area for weighting down when commencing filling the snow mould, so that the upper part of the snow mould may be more easily controlled during filling. The inwardly extending planar region is shaped to lie substantially flat across flat underlying ground, so that it may be easily withdrawn from beneath the snow contained within the filled snow mould (e.g. by being flat, and not folded, the planar region may be more easily withdrawn from beneath a heavy snow sculpture formed by the snow confined within the snow mould).

The inwardly extending planar region may be configured to extend inwardly from sides of the snow mould, in use, by at least 5cm, or by at least 10cm, or by at least 20cm. The base opening may have an area that is less than 90% of the area that the base portion is configured to occupy in use, or less than 80%, or less than 70%.

The planar region may be narrowest adjacent the first and second edges.

The arrangement of complementary fastening elements may extend to the base opening.

The base portion may be configured to provide a planar region adjacent the base opening, in use in the connected configuration, and the arrangement of complementary fastening elements does not extend into the planar region.

The first and second edges may extend to the filling hole in the connected configuration.

A fastening element may extend along each of the first and second edges.

The fastening elements may form a zip fastening, with teeth extending along the first and second edges, and with a manually operable slider.

The teeth may be plastic teeth.

The first and second edges may be provided with a complementary hook and loop fastening strips.

A plurality of separate fastening elements may be provided on each of the first and second edges.

The fastening elements may be selected from the group consisting of:
a plurality of pairs of hook and loop fastenings;
buttons and button holes;
toggles and loops;
buttons and loops; and
pinch-release clip buckles.

The arrangement of complementary fastening elements may provide a smooth inner face when the mould is in the connected configuration.

The foldable sheet may be a woven sheet.

The woven sheet may be a woven polyester sheet. The woven sheet may be a woven nylon sheet.

The foldable sheet may have a linear mass density of at least 200 Denier

The foldable sheet may be formed from a plurality of stitched panels.

The panels may be stitched with seams on the outside, when the mould is in the connected configuration.

One or more non-planar inserts may be provided within apertures of the foldable sheet.

One or more handles may be provided proximate the filling opening.

Two handles may be provided on opposites sides of the filling opening.

One or more handles may be provided remotely from the filing opening.

### DESCRIPTION OF THE DRAWINGS

Examples are further described hereinafter with reference to the accompanying drawings, in which:
- Figures 1A shows a perspective view of a snow mould with a zip fastener, in use and full of snow;
- Figure 1B shows a further view of the snow mould of Figure 1A in use, at an earlier stage of filling, when partially filled with snow;
- Figure 1C shows a cut-away view through the snow mould of Figure 1A, cut parallel to the ground;
- Figure 1D shows a cross-sectional view through the snow mould of Figure 1A perpendicular to the ground;
- Figure 1E shows a cut-away view of a second snow mould, cut parallel to the ground;
- Figure 2 shows a perspective view of a third snow mould, with a hook and loop fastener; and
- Figure 3 shows a perspective view of a fourth snow mould, with a loop and button fastener.

### DETAILED DESCRIPTION

Like reference numerals refer to like elements throughout. In the described examples, like features have been identified with like numerals, albeit in some cases having one or more increments of integer multiples of 100. For example, in different figures, 100, 100', 200 and 300 have been used to indicate a snow mould.

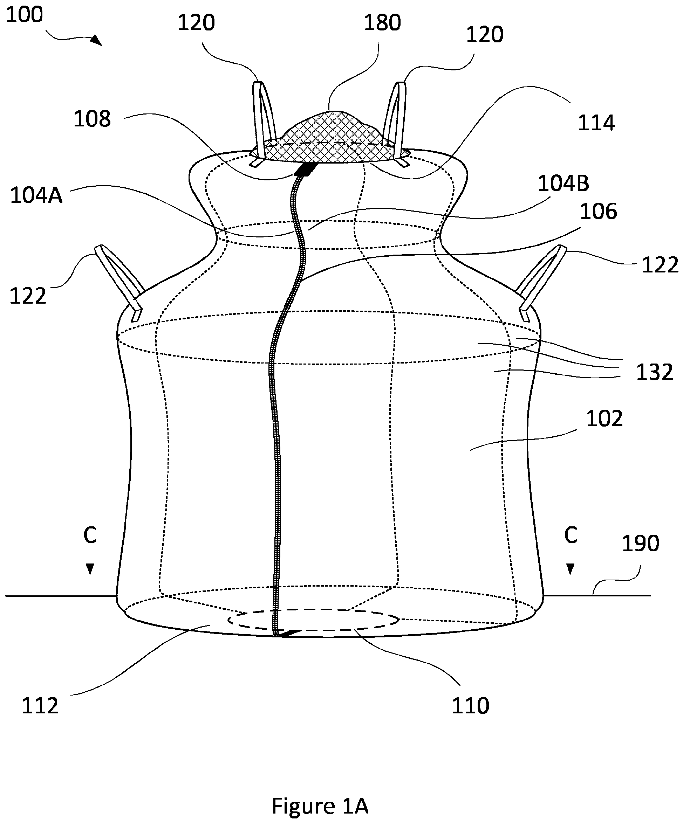

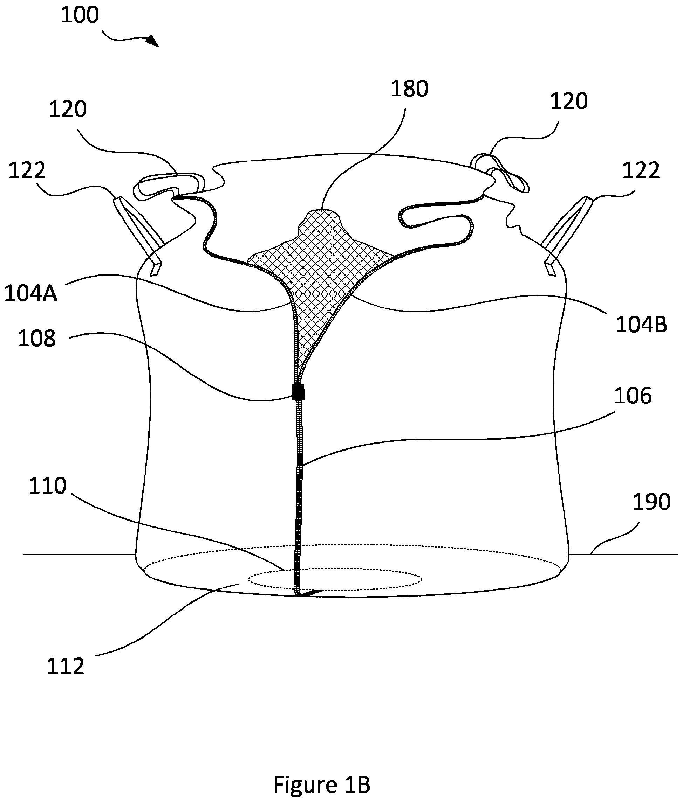

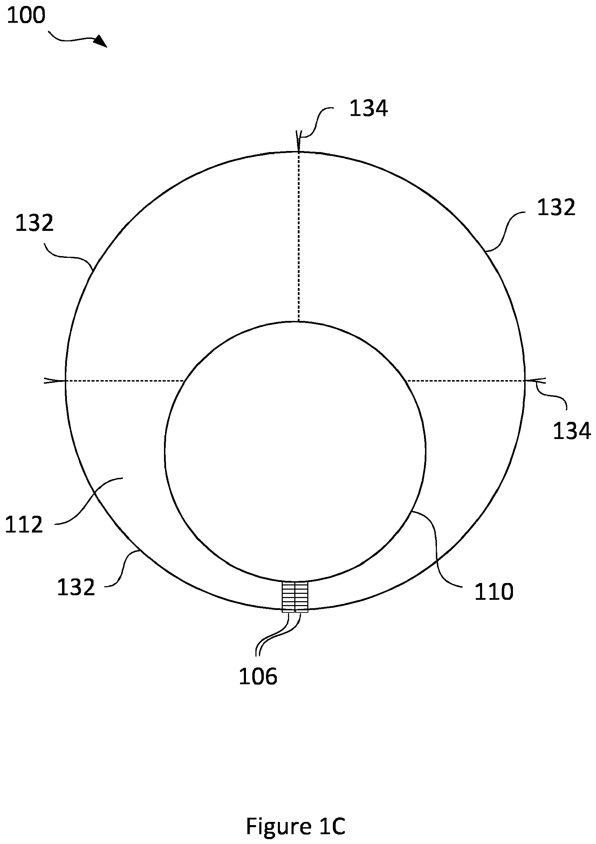

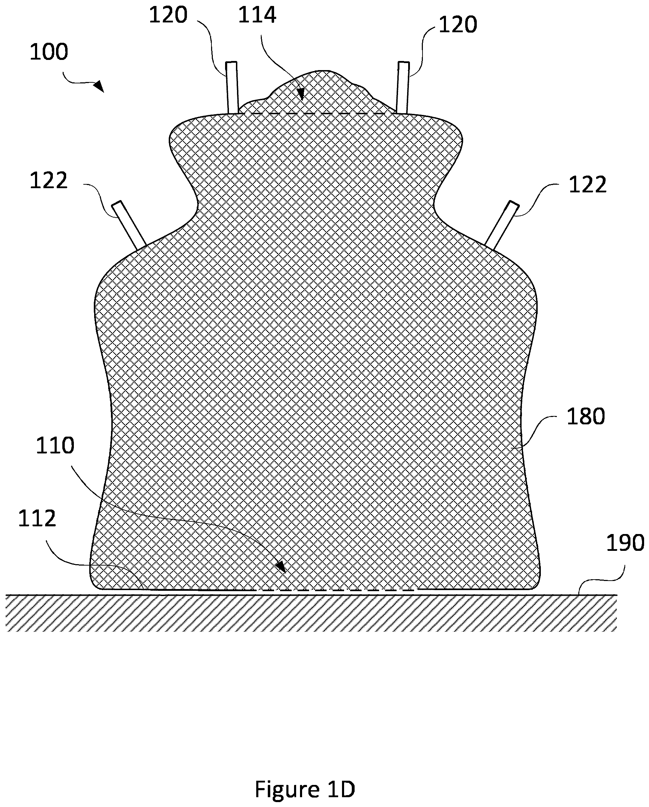

Figures 1A shows a perspective view of a snow mould 100, once filled full of snow 180. Figure 1B shows a further view of the snow mould 100 in use, at an earlier stage of filling, when it is partially filled with snow 180. Figure 1C shows a cut-away view of the bottom part of the snow mould 100. Figure 1D shows a vertical cross-sectional view through the filled snow mould of Figure 1A.

The snow mould 100 is formed from a flexible, resilient, foldable sheet 102, with edges 104A, 104B, provided with complementary portions of a fastening arrangement 106. In the illustrated snow mould 100, the fastening arrangement is a zip fastener, and when fully fastened, the zip fastener 106 extends between a base opening 110 in a base portion 112 and a filling opening 114, which are at opposite ends of the snow mould 100. In the illustrated snow mould 100, the base portion 112 is provided by a skirt-like planar region of the foldable sheet that extends inwardly to the base opening 110, extending beneath the snow 180 contained within the snow mould 100, and is shaped to lie flat across flat underlying ground 190, in use. Being shaped to extend smoothly across the underlying ground, without being folded, facilitates withdrawal of the planar region from beneath the heavy, finished snow sculpture.

In use, the snow mould 100 surrounds the contained snow 180 (e.g. the snow mould has no other openings in the moulding surface), which conforms to the shape of the snow mould to form a snow sculpture, for example a snowman. The snow mould securely retains the contained snow, and allows the surface of the snow sculpture to be manually smoothed down.

In use, the lower part of the zip fastener 106 is closed, and the base portion 112 is placed on the ground 190, with the upper part of the snow mould 100 arranged to expose the interior of the mould. Snow 180 is then placed into the snow mould 100, including onto the flat base portion 112, for example by shovelling snow from the surrounding ground 190. The snow resting on the flat portion 112 weights down the snow mould 100, holding the bottom of the snow mould in place on the ground, which facilitates filing by enabling the bottom of the snow mould to be held in place on the ground whilst the upper part of the snow mould it held up from the ground. Then the sides of the snow mould 100 are raised, and the snow within the snow mould is tamped down to fill-out the mould and firmly conform to the shape of the mould.

The cycle is then repeated, with more of the zip fastener 106 being closed, and further snow 180 being placed into the snow mould 100, before the sides are raised and the snow is again tamped down to conform to the mould. Figure 1B shows a partially filled snow mould 100 with a partially closed zip fastener 106. The cycle of closing more of the zip fastener 106, filling with snow 180 and tamping it down is repeated until the snow mould 100 is full, as shown in Figures 1A and 1D.

The mould may be provided with handles to facilitate raising the sides of the snow mould 100 during filling and tamping, e.g. upper level handles 120. The provision of handles may also facilitate providing a non-vertical force to the snow mould 100 during filling, for example to counter asymmetric filling, or to provide stability to an asymmetrically-shaped snow sculpture. Further handles may also (or alternatively) be provided to facilitate raising the sides of the snow mould 100 during filling and tamping, which are located away from both the base opening 110 and the filling opening 114, e.g. mid-level handles 122, provided approximately half way up the height of the snow sculpture, in use. The handles 120, 122 extend externally from the snow moulding surface in use, for example being loops of fabric connected to the exterior of the snow mould at ends, with an intermediary portion hanging free. The handles 120, 122 may be attached to the outside of the snow mould, e.g. by stitching. The handles are configured for grasping by a user, for example by passing the fingers of a hand through the handle and grasping the handle as it extends across the palm of the hand.

Being formed from a flexible sheet enables the mould to be gradually peeled away from the completed snow sculpture, reducing the risk of damage from adhesion between the mould and the snow sculpture. Further, being flexible enables external pressure to be manually applied to the snow mould during filling, to enhance the conformance of the surface of the contained snow, to compact the surface of the snow to improve its ability to retain the shape of the mould after the removal of the mould.

The base portion of the snow mould 100 has a flat area 112 around the base opening 110 that extends inwardly across the underlying ground 190, and in use snow 180 contained within the snow mould rests upon the flat area as the snow mould is filled.

Having a base portion that narrows towards the base opening facilitates filling the snow mould, by retaining snow within the snow mould to weight down the bottom of the snow mould, e.g. when the sides of the snow mould are held up, or raised for tamping down of the contained snow.

Once the construction of the snow sculpture within the snow mould is complete, the zip fastener 106 is unzipped between the filling opening 114 down to the base portion 112. The user then inserts their hand under the edge of the bottom of the snow sculpture to complete the unzipping of the zip fastener 106 (zipper). The upper portion of the snow mould 100 is peeled from the surface of the snow sculpture, and starting from one edge 104A and working around to the other edge 104B, the base portion 112 is drawn out from beneath the edge of the snow sculpture.

In the illustrated snow mould 100, the base opening 110 is off-centre in the flat base portion 112, being located towards the fastening arrangement 106, as is shown in the cut-away view of Figure 1D. The base opening 110 being provided off-centre, towards the fastening arrangement 106 facilitates the user in releasing the fastening arrangement (e.g. unzipping the zip fastener) beneath the bottom of the snow sculpture, by extending only a short distance beneath the snow sculpture from the bottom edge of the snow sculpture.

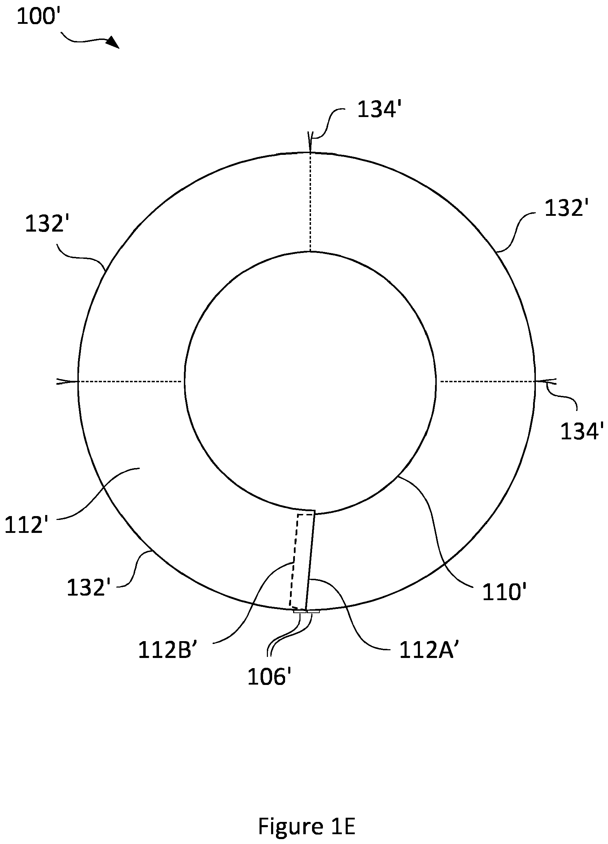

Alternatively, the base opening may extend to the edge of the flat base portion, so that the fastener arrangement does not significantly extend beneath the edge of the snow sculpture (e.g. the bottom stop of the zip fastener is not beneath the snow sculpture in use). A snow mould in which the fastener arrangement does not extend beneath the edge of the snow sculpture may enable the snow mould to be more easily removed from the snow sculpture, with the user not being required to insert their hand beneath the edge of the snow sculpture to complete the unzipping of the zip fastener. Figure 1E shows a cut-away view of a further snow mould 100, in which the fastener arrangement 106' stops at the bottom of the sides of the snow mould, and does not extend into the flat area 112' resting beneath the snow sculpture. Beneath the snow sculpture, the edges 112A' and 112B' of the flat region are not connected, and may overlap, as illustrated.

The snow mould of Figure 1A has a base opening 110 that is asymmetrically located. Alternatively, the base opening 110' may be symmetrically located, as shown in Figure 1E. The provision of a symmetrically located base opening may enhance handling during filling, and may be particularly suited to a snow moulds which the fastening mechanism does not extend substantially beyond the sides of the snow mould, into the flat area 112'.

In the illustrated snow mould 100, the foldable sheet 102 is formed from woven high linear mass density fibre, e.g. 400 Denier woven polyester or nylon fibre. Polyester and nylon have a low adhesion to the sculpted snow. Further, high linear mass density polyester or nylon (e.g. at least 200 Denier) retains its shape under pressure from the snow within the snow mould, and resists plastic deformation in ordinary use. Yet further, high linear mass density polyester or nylon is strong-enough to withstand robust and repeated use, for example withstanding glancing contact with the edge of a shovel during filling.

In the illustrated snow mould, the foldable sheet 102 is formed from a plurality of panels 132 that are stitched together (alternatively, the foldable sheet may be shaped, single panel). Figure 1C shows a cut-away view of the snow mould 100 of Figure 1A, cut parallel to the ground 190, corresponding with the line C-C of Figure 1A. The panels 132 may be stitched together with the seam allowances and raw edges of the panels on the outside of the snow mould 100, to provide a smooth surface finish to the snow sculpture, in use. Alternatively, the panels may be stitched together using a seam without exposed raw edges, again to provide a smooth surface finish to the snow sculpture, in use.

The snow mould may be provided with inset panels (not shown) of a less flexible material, which has a profiled inner surface that produces a corresponding profile on the outer surface of the corresponding part of the snow sculpture, in use. For example, profiled silicone panels may be inset into the snow mould, e.g. within a window in a single panel of the foldable sheet material, or between different panels of the foldable sheet material. The provision of inset panels with profiled inner surfaces may enable the provision of surface detailing on the snow sculpture, e.g. providing facial features of a human or animal snow sculpture.

In the illustrated snow mould 100, the first and second edges 104A and 104B extend to the filling hole 114. This enables the fastener arrangement 106 to be unfastened from the filling hole 114 to provide a larger aperture through which snow may enter the inside of the snow mould.

Alternatively the fastener arrangement may not extend to the filling hole (not shown), and when full fastened, the fastener arrangement may be closed without leaving an opening (or substantially no opening, i.e. no opening through which snow might usefully be transferred into the snow mould) at the opposite end of the fastening arrangement from the base opening.

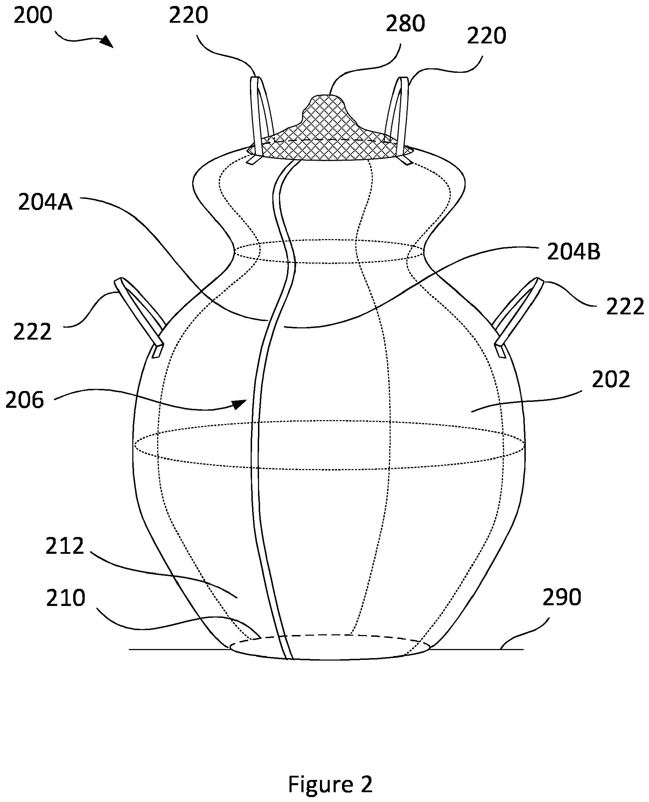

Figure 2 illustrates the lower portion of a further snow mould 200, in which the base portion 212 tapers inwardly to a base opening 210 without the snow sculpture resting upon a substantial portion of the snow mould, in use. The use of an inwardly tapered base portion may enable the snow mould to be removed particularly easily, once the snow sculpture has been completed. Alternatively, the snow mould 200 of Figure 2 may additionally be provided with a flat area extending inwardly from the sides of the snow mould.

In the illustrated snow mould 100, the fastening arrangement 106 is provided by a zip fastener, having complementary rows of teeth (elements) extending along the opposed edges 104A, 104B of the sheet 102, and a zip slider 108. In use, the zip slider 108 is on the outside of the snow mould 100, so that the slider (e.g. a slider handle) is manually operable to fasten and unfasten the fastening arrangement 106. The use of a zip fastener enables the snow mould be to be easily fully or partially fastened by the user. The zip fastener may have a locking mechanism to releasably hold the slider 108 in place, e.g. by providing a locking-pin projecting from a handle that is pivotably connected to the slider body, and which can engage with the teeth when the slider is not in use.

The zip fastener 106 of the illustrated snow mould 100 has plastic zip teeth (elements) and a plastic slider 108 for engaging the complementary rows of teeth. The use of a plastic zip fastener may be resistant to adhesion of snow and ice, which might otherwise impair the working of the zip fastener.

Alternatively, the fastening arrangement 206 may be provided by a hook and loop fastener (e.g. a Velcro® fastener), with complementary strips of fastening elements extending along the opposed edges of the sheet, as illustrated on the snow mould 200 of Figure 2. Use of a hook and loop fastener enables the snow mould to be fully or partially fastened by the user.

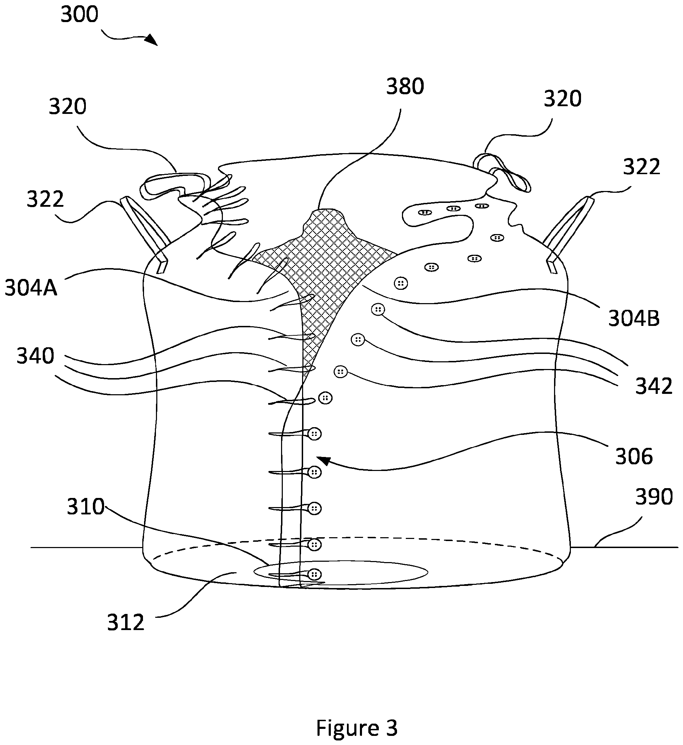

In a further alternative, the fastening arrangement may be provided by separate pairs of fastening elements. For example, the pairs of fasteners may be hook and loop fasteners (e.g. Velcro®), toggle/button and loop fasteners, or pinch-release clip buckles, for example with one part of each pair being provided on the surface of the foldable material adjacent the edge of the material, and the other provided on a tab that extends across from the other edge. Figure 3 illustrates a fastening arrangement that uses loops 340 attached adjacent one edge 304A of the foldable sheet material 302, which are releasably connected across to buttons 342, which are attached adjacent the other edge 304B. The use of separate pairs of fastening elements may enable particularly reliable operation, and inexpensive manufacturing.

The snow mould may have a smooth inner surface beneath the fastening arrangement. In the illustrated snow mould 100, the inner face of the zip fastener is shielded by a backing region 136 (e.g. a backing of the foldable material), as shown in Figure 1C. In use, the smooth inner surface beneath the fastening arrangement provides a smooth surface finish to the snow sculpture, in use.

Figure 3 shows a perspective view of a design of a further snow mould 300. The snow mould 300 has a base portion with a skirt-like flap 312 that folds under the edge of the snow sculpture, to lie flat on the ground, in use, and the fastener arrangement (the button and loop arrangement illustrated, or an alternative fastener arrangement) substantially does not extend beneath the contained snow within the mould into the flat portion 312. The base portion of the mould has a centrally located base opening 310, similar to that shown in the cut-away illustration in Figure 1E. Although illustrated as a single piece, the planar region may alternatively be formed from a plurality of flaps that lie flat on the ground beneath the snow mould, in use.

A snow mould in which the zip fastener does not extend beneath the edge of the snow sculpture may enable the snow mould to be more easily removed from the snow sculpture, with the user not being required to insert their hand beneath the edge of the snow sculpture to complete the unzipping of the zip fastener, prior to tugging out the base portion from beneath the snow sculpture.

The figures provided herein are schematic and not to scale.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A snow mould comprising a foldable sheet, wherein the sheet has first and second edges provided with an arrangement of complementary fastening elements configured to releasably connect together the first and second edges in a connected configuration,
wherein, in the connected configuration, the snow mould has a base portion that narrows towards a base opening, the first and second edges extend to the base opening, and there is a filling opening remote from the base opening for use when putting snow into the mould.

2. The snow mould of claim 1, wherein the base portion is configured to provide a planar region extending inwardly from the sides of the snow mould to the base opening, and configured to lie flat across underlying ground in use in the connected configuration.

3. The snow mould of claim 2, wherein the base portion is configured to provide a planar region around the base opening, in use in the connected configuration.

4. The snow mould of claim 2 or 3, wherein the planar region is narrowest adjacent the first and second edges.

5. The snow mould of any preceding claim, wherein the arrangement of complementary fastening elements extends to the base opening.

6. The snow mould of any one of claims 1 to 4, wherein the base portion is configured to provide a planar region adjacent the base opening, in use in the connected configuration, and the arrangement of complementary fastening elements does not extend into the planar region.

7. The snow mould of any preceding claim, wherein the first and second edges extend to the filling hole in the connected configuration.

8. The snow mould of any preceding claim, wherein a fastening element extends along each of the first and second edges.

9. The snow mould of any preceding claim, wherein the arrangement of complementary fastening elements provides a smooth inner face when the mould is in the connected configuration.

10. The snow mould of any preceding claim, wherein the foldable sheet is a woven sheet.

11. The snow mould of any preceding claim, wherein the foldable sheet is formed from a plurality of stitched panels.

12. The snow mould of claim 11, wherein the panels are stitched with seams on the outside, when the mould is in the connected configuration.

13. The snow mould of any preceding claim, wherein one or more non-planar inserts are provided within apertures of the foldable sheet.

14. The snow mould of any preceding claim, wherein one or more handles are provided proximate the filling opening.

15. The snow mould of any preceding claim, wherein one or more handles are provided remotely from the filing opening.
